# EUROPEAN PATENT SPECIFICATION

(11) **EP 2 935 486 B1**
(45) Date of publication and mention of the grant of the patent: **14.09.2016**
(21) Application number: 13805796.3
(22) Date of filing: 29.11.2013
(51) Int. Cl.: C09D 175/00

(54) **STAINING INHIBITING POLYURETHANES**
FÄRBUNGSHEMMENDE POLYURETHANE
POLYURETHANES INHIBANT LA COLORATION

(30) Priority: 20.12.2012 IT VA20120051
(43) Date of publication of application: 28.10.2015
(73) Proprietor: Lamberti SpA, 21041 Albizzate (VA) (IT)
(72) Inventor: COGET, Karine, I-21019 Somma Lombardo (IT); FUMAGALLI, Stefano, I-21040 Carnago (VA) (IT); COSTA, Gabriele, I-20026 Novate Milanese (IT); DE LUCA, Mariuccia, I-21015 Lonate Pozzolo (VA) (IT); SIRONI, Enrico, I-20037 Paderno Dugnano (MI) (IT); FURGIONE, Jennifer, I-20020 Vanzaghello (MI) (IT); FLORIDI, Giovanni, I-28100 Novara (IT); LI BASSI, Giuseppe, I-21026 Gavirate (VA) (IT)
(74) Representative: Giaroni, Paola
(86) International application number: PCT/EP2013/075032
(87) International publication number: WO 2014/095300

(56) References cited:
- WO-A1-2005/047358
- WO-A1-2005/071023
- WO-A1-2011/098583
- US-A- 5 912 299

## Description

The present invention relates to aqueous coating compositions of film-forming cationic polyurethanes and to their use as staining inhibitor, especially for wooden substrate.

### PRIOR ART

Staining, an undesirable process which results in aesthetic degradation and loss of decorative value of protective coatings, is a problem frequently encountered, for example, with white coatings applied on wood substrates. It is observed usually as yellow-brown coloration or as randomly distributed brown colored spots on freshly applied aqueous white coatings and, more particularly, on white coated wood substrates exposed to high humidity conditions.

Water soluble tannins or tannic acids, natural compounds of complex and non-uniform composition, are among the staining species involved and are abundantly present in woods, especially in redwood substrates. Tannin staining includes several concurrent processes: water or vapor penetration of wood substrates, solubilization, diffusion into the coating and darkening of the air-exposed tannin species, among others. It is significant to observe that the rate of staining is diffusionally controlled and its extent is significantly dependent on the substrate's tannin concentration.

There are many specific compounds known in the prior art as "staining inhibitors" or "antistain agents", which are functional components of water or solvent based compositions and provide such protective capacity to coating systems applied on wood substrates.

By definition, in the above specified sense staining inhibition implies such capacities of the specialized coating systems, to interact with dissolved tannin species and to interfere with related diffusion processes, thus causing "in situ" immobilization of the formers and resulting in overall blocking of the staining process.

For many years, pigments containing cations (reactive pigments), that form lightly-colored water-insoluble compounds with the tannate ions to prevent their diffusion, were used for this purpose. US 4,218,516 describes the use of magnesium hydroxide to form a leach-resistant magnesium hydroxide-tannin complex. US 2,818,344, US 3,085,893 and US 3,033,700 describe the use of barium metaborate to prevent tannin-stain bleed as well as other types of discoloration. Other pigments containing alkaline earth metals (such as calcium barium phosphosilicate as well as other calcium compounds or strontium compounds) would be expected to react with and precipitate tannins in a similar manner. Also water-soluble basic aluminum salts (such as halides, nitrates, formates, sulfates, and phenolsulfonates as well as double salts containing these anions) are used as another type of paint additive for tannin-stain blocking. The use of these basic aluminum salts for this purpose is disclosed, for example, in US 3,900,620 and US 4,021,398. However, these reactive pigments could obviously only be used in the sub-set of pigmented aqueous coatings and not in clear coatings. Moreover, reactive pigments could cause polymer gelation and coagulation in coating systems containing them. As a consequence, it has become desirable to develop stain-blocking aqueous coating compositions which did not contain reactive pigments.

In the last years, polymeric antistain agents have been successfully marketed.

US 5,312,863 describes a antistain coating composition containing an aqueous dispersion of a cationic latex polymer binder, obtained from ethylenically unsaturated monomers having an incorporated cationic functionality.

US 5,527,619 discloses a method of treating tannin-containing wood substrates with an organosilane-modified coating composition to improve the stain blocking.

In US 6,531,223 the invention is directed to a water-based coating composition including a tannin blocking latex resin, microspheres and a reactive pigment, wherein said latex resin include those prepared by polymerizing at least one ethylenically unsaturated monomer in water using surfactants and water soluble initiators.

However all of the above-mentioned polymers suffer from various disadvantages and fail to offer an adequate solution to the problems posed.

The Applicant has now found that film-forming cationic polyurethanes not only have excellent staining inhibition properties but give also unexpected physical properties to the coated substrate, such as good sandability, transparency and gloss of the films obtained therefrom. These film-forming cationic polyurethanes can be provided as aqueous dispersions, free from solvents, which are remarkably stable, providing positive effects on their storability.

Aqueous dispersions of cationic polyurethanes which are capable of producing films are well known; their preparation and use in many industrial fields, such as in the field of cosmetics, textiles, leather and paper, are described in several patents.

For example, WO 2011/098583 describes a composition comprising a transition metal complex as dryer and an auto-oxidative resin comprising a polymer comprising unsaturated fatty acids. The compositions are used in lacquers, paints, inks and varnishes. Polyurethanes, both anionic or cationic, are cited among the suitable resins but no further description or example is provided.

WO 2005/071023 discloses a stain blocking water borne coating composition, which can comprise also a conventional polyurethane dispersion. Two commercial anionic polyurethanes based on polyesters are mentioned.

WO 2005/047358 describes aqueous hydrophobic and oleophobic coating composition comprising fluoropolymers. Preferred fluoropolymers are polyurethanes comprising fluoroalkoxyalkyl and dispersant functionalities. The dispersant functionality is preferably an anionic group and more preferably a carboxylic group. No mention of the cationic functionality is made.

US 5,912,299 discloses low VOC compositions for coating, staining and protecting porous substrates such as wood, concrete, cement, brick and the like, comprising aqueous dispersions of polyurethane-ureas. In order to stabilize the dispersion, these polymers must contain compounds having ionic or at least hydrophilic groups, such as carboxylic, sulphonic or ammonium groups.

According to the Applicant's knowledge, no one have described the use of the cationic polyurethanes of the invention as staining inhibitors.

### DESCRIPTION OF THE INVENTION

It is therefore an object of the present invention the use as antistain coating agent for wooden or plasterboard substrate of an aqueous composition comprising from 15 to 45% by weight of a cationic polyurethane containing from 20 to 150 meq/g of cationic groups.

It is another object of the invention a process for the inhibition of staining of a wooden or plasterboard substrate comprising the step of applying to said substrate an aqueous coating composition comprising from 15 to 45% by weight of a cationic polyurethane containing from 20 to 150 meq/g of cationic groups.

### DETAILED DESCRIPTION OF THE INVENTION

It is preferred that the aqueous coating composition comprises from 18 to 35 wt% of the cationic polyurethane containing from 20 to 150 meq/g of cationic groups in order to ensure adequate coating of the substrate. The cationic polyurethane containing from 20 to 150 meq/g of cationic groups can be prepared by salifying and extending in water with water and/or a polyamine a prepolymer obtained by reacting:
I) an aliphatic, cycloaliphatic, araliphatic or aromatic polyisocyanate;
II) a polycarbonate polyol and/or a polyester polyol having a number average molecular weight comprised between 500 and 3500;
III) an aliphatic tertiary amine having two hydroxyl groups that react with isocyanate -NCO groups;
IV) optionally a bisphenol or an alkylene oxide adduct of a bisphenol;
V) optionally an oxidatively drying resin with at least one -NCO reactive group, which resin has a number average molecular weight comprised between 450 and 4000;
VI) optionally a compound with one -NCO reactive group, in such proportions that: the molar ratio between the isocyanate groups -NCO of I) and the sum of isocyanate reactive groups of II), III), IV), V) and VI) is between 1.2 and 2.5; the polycarbonate polyol and/or polyester polyol II) represents from 30 to 95 mol% of the sum of components II), III), IV), V) and VI); and I), II), III), IV), V) and VI) represent at least 90 mol% of the components of the propolymer.

In a preferred embodiment the prepolymer is prepared by reacting the components from I) to VI) in such proportions that: the molar ratio between the isocyanate groups -NCO of I) and the sum of isocyanate reactive groups of II), III), IV), V) and VI) is between 1.2 and 2.5; the polycarbonate polyol and/or polyester polyol II) represents from 30 to 95 mol% of the sum of components II), III), IV), V) and VI); the bisphenol or alkylene oxide adduct of a bisphenol IV) represents from 3 to 25 mol% of the sum of components II), III), IV), V) and VI); and I), II), III), IV), V) and VI) represent at least 90 mol% of the components of the prepolymer.

In another preferred embodiment the prepolymer is prepared by reacting the components from I) to VI) in such proportions that: the molar ratio between the isocyanate groups NCO of I) and the sum of isocyanate reactive groups of II), III), IV), V) and VI) is between 1.2 and 2.5; the polycarbonate polyol and/or polyester polyol II) represents from 30 to 95 mol% of the sum of components II), III), IV), V) and VI); the oxidatively drying resin V) represents from 2 to 20 mol% of the sum of components II), III), IV), V) and VI); and I), II), III), IV), V) and VI) represent at least 90 mol% of the components of the prepolymer.

In the most preferred embodiment the prepolymer is prepared by reacting the components from I) to VI) in such proportions that: the molar ratio between the isocyanate groups -NCO of I) and the sum of isocyanate reactive groups of II), III), IV), V) and VI) is between 1.2 and 2.5; the polycarbonate polyol and/or polyester polyol II) represents from 30 to 70 mol% of the sum of components II), III), IV), V) and VI); the bisphenol or alkylene oxide adduct of a bisphenol IV) represents from 10 to 20 mol% of the sum of components II), III), IV), V) and VI); the oxidatively drying resin V) represents from 3 to 12 mol% of the sum of components II), III), IV), V) and VI); and I), II), III), IV), V) and VI) represent 100 mol% of the components of the prepolymer.

Component (I) of the cationic polyurethane is any organic aliphatic, cycloaliphatic, araliphatic or aromatic polyisocyanate. Examples of suitable polyisocyanates include 1,6-hexamethylene diisocyanate (HDI), 2-methyl pentane 1,5-diisocyanate, isophorone diisocyanate (IPDI), cyclohexane-1,4-diisocyanate, 4,4'-dicyclohexylmethane diisocyanate (4,4'-H₁₂MDI), p-xylylene diisocyanate, p-tetramethylxylene diisocyanate (p-TMXDI) (and its meta isomer m-TMXDI), 1,4-phenylene diisocyanate, hydrogenated 2,4-toluene diisocyanate, hydrogenated 2,6-toluene diisocyanate, 4,4'-diphenylmethane diisocyanate (4,4'-MDI), 2,4'-diphenylmethane diisocyanate, 3(4)-isocyanatomethyl-1-methyl cyclohexyl isocyanate (IMCI) and 1,5-naphthylene diisocyanate. Mixtures of polyisocyanates can be used and also polyisocyanate which have been modified by the introduction of urethane, allophanate, urea, biuret, carbodiimide, uretonimine, uretdione or isocyanurate residues. Preferably the polyisocyanate is a cycloaliphatic or aliphatic diisocyanate. More preferably the polyisocyanate is one of isophorone diisocyanate or 4,4'-dicyclohexylmethane diisocyanate. Most preferably, the polyisocyanate is 4,4'-dicyclohexylmethane diisocyanate.

The polycarbonate or polyester polyols (component II) having a number average molecular weight of 500 to 3500, preferably from 500 to 2000, are those commonly used in the field and known to the experts in the art. The polycarbonate polyols are obtained, for example, by reacting carbonic acid derivatives, such as for example diphenyl carbonate or phosgene, and polyols. Suitable polyols include the commercially available diols, such as ethylene glycol, 1,2- and 1,3-propanediol, 1,3-and 1,4-butanediol, 1,6-hexanediol, cyclohexane dimethanol, diethylene glycol, dipropylene glycol, neopentyl glycol or mixtures of these diols. Examples of suitable triols are glycerol and trimethylol propane. The preferred polyols are diols and 1,6-hexanediol is particularly preferred. The polyester polyols are obtained, for example, by reacting dicarboxylic acids, or possibly the corresponding anhydrides, with polyols, optionally in the presence of known esterification catalysts.

Examples of suitable dicarboxylic acids or anhydrides include adipic acid, succinic acid, maleic acid, sebacic acid, azelaic acids, the various commercially available dimeric fatty acids in saturated (hydrogenated) or unsaturated form, phthalic acid, isophthalic acid, tetrahydrophthalic acid, 1,4-cyclohexanedicarboxylic acid and hexahydrophthalic acid.

Suitable polyols for the preparation of the polyester of the invention are those mentioned above for the preparation of the polycarbonate polyols. Component III), the aliphatic amine having two hydroxyl groups that react with the -NCO group, is preferably 3-(diethylamino)-1,2-propanediol or an alkyl diethanol amine; among the alkyl diethanol amines, methyl-, ethyl-, isopropyl-, n-butyl-, t-butyl-, cyclohexyl-, n-hexyl- diethanol amine, and mixtures thereof are particularly useful.

The amount of cationic groups which are contained in the polyurethane is measured in milliequivalent (meq) of amine and is expressed as the number of amine meq on grams of dry polyurethane. In the present invention the meq of cationic groups per grams of polyurethane range from 20 to 150, preferably from 30 to 90, most preferably from 40 to 65. Examples of bisphenols, which can be used directly as component IV), or as the base for the preparation of alkylene oxide adducts, that are suitable as component IV), include, but are not particularly limited to, bisphenol A (2,2-bis(4-hydroxyphenyl)propane), bisphenol B (2,2-bis(4-hydroxyphenyl)butane), bisphenol C (1,4-bis(4-hydroxyphenyl) cyclohexane) and bisphenol F (2,2'-methylenediphenol), fluorinated bisphenol A, chlorinated bisphenol A, brominated bisphenol A, hydrogenated bisphenol A, bis(4-hydroxyphenyl)sulfide, bis(4-hydroxyphenyl)methane, bis(4-hydroxyphenyl) ether and bis(4-hydroxyphenyl)amine.

The alkylene oxide adducts of a bisphenol are preferably the reaction products of the above listed bisphenols with an alkylene oxide having 2 to 4 carbon atoms, such as ethylene oxide and propylene oxide. Regarding the amount alkylene oxide units in the alkylene oxide adduct of bisphenol, a compound in which from 1 to 10, preferably from 1 to 5, more preferably from 1 to 2 moles of an alkylene oxide is added per equivalent of hydroxyl groups of bisphenol is preferable from the standpoint of controlling the properties of the resulting polyurethane. Among these, bisphenol B, bisphenol A and their alkylene oxide adducts are preferred.

The expression "oxidatively drying resin", or alkyd resin, is used in the context of this invention to denote polycondensates, prepared from alcohols and carboxylic acids by known processes of polycondensation, that comprise oxidatively drying groups from unsaturated and polyunsaturated aliphatic compounds.

These resins are described for example in "The Chemistry of Organic Filmformers" by Solomon D.H., pages 75 to 101, John Wiley & Sons Inc., New York, 1967.

Alkyd resins are liquid and able to form covalent bonds as the result of the condensation and polymerization reactions of the oxidatively drying groups (drying).

The oxidatively drying resin of the invention IV) is a mono- or poly-ol polyester and has a number average molecular weight between 450 and 4000, preferably between 600 and 2000, which is calculated upon the basis of the terminal acid groups and the terminal hydroxyl groups. Usually these resins have a hydroxyl number of about 30 to about 300 mg KOH/g, preferably of about 50 to about 190 mg KOH/g.

The alkyd resin of the invention may be prepared from polyols and unsaturated fatty acids, possibly in combination with saturated fatty acids and polycarboxylic acids. The number of unsaturated fatty acids eligible for use in the preparation of the alkyd resins to be employed according to the invention is exceedingly large. However, preference is given to the use of mono- and poly-unsaturated fatty acids, preferably those containing from 12 to 26 carbon atoms. Specific examples are mono-unsaturated fatty acids, such as lauroleic acid, myristoleic acid, palmitoleic acid, oleic acid, gadoleic acid, erucic acid, ricinoleic acid; bi-unsaturated fatty acids, such as linoleic acid; tri-unsaturated acids, such as linolenic acid, eleostearic acid, and licanic acid; and other unsaturated fatty acids obtained from animal or vegetable oils.

Among the saturated fatty acids, which can be used in combination with unsaturated acids, preference is given to those containing from 12 to 26 carbon atoms. Specific examples include lauric acid, myristic acid, palmitic acid, stearic acid and arachidic acid.

In the preparation of the alkyd resin, the mentioned monocarboxylic acids may be used wholly or in part as triglycerides, for example as vegetable oil. Mixtures of two or more of such monocarboxylic acids or triglycerides may be employed, optionally in the presence of one or more saturated, (cyclo)aliphatic or aromatic monocarboxylic acids, for example 2-ethylhexanoic acid, lauric acid, palmitic acid, stearic acid, and benzoic acid.

Examples of polycarboxylic acids that can be used include phthalic acid, isophthalic acid, terephthalic acid, 5-tert-butyl isophthalic acid, trimellitic acid, pyromellitic acid, succinic acid, adipic acid, 2,2,4-trimethyl adipic acid, azelaic acid, sebacic acid, dimerised fatty acids, cyclopentane-1,2-dicarboxylic acid, cyclohexane-1,2-dicarboxylic acid, 4-methylcyclohexane-1,2-dicarboxylic acid, tetrahydrophthalic acid, cyclohexane-1,2,4,5-tetracarboxylic acid and butane-1,2,3,4-tetracarboxylic acid. If so desired, the carboxylic acids may be used as anhydrides or in the form of an ester, e.g., an ester of an alcohol having from 1 to 4 carbon atoms.

In addition, the alkyd resin comprises a polyol component. Examples of suitable polyols are diols such as ethylene glycol, 1,3-propane diol, 1,6-hexane diol, 1,12-dodecane diol, 3-methyl-1,5-pentane diol, 2,2,4-trimethyl-1,6-hexane diol, 2,2-dimethyl-1,3-propane diol, and 2-methyl-2-cyclohexyl-1,3-propane diol. Examples of suitable polyols are also triols such as glycerol, trimethylol ethane and trimethylol propane. Suitable polyols having more than three hydroxyl groups are pentaerythritol, sorbitol, and the etherification products of the above polyols , such as di-(trimethylol propane) and di-, tri- and tetra-pentaerythritol. Preferably, use is made of compounds having from 3 to 12 carbon atoms, e.g. glycerol, trimethylol propane and pentaerythritol.

The alkyd resins can be obtained by direct esterification of the constituent components, with the option of a portion of these components having been already converted into ester polyols or polyester polyols. Alternatively, the unsaturated fatty acids can be used in the form of a drying oil, such as sunflower oil, linseed oil, tuna fish oil, dehydrated castor oil and dehydrated coconut oil, and transesterified to give the final alkyd resin.

Component VI) is a compound containing one isocyanate reactive group useful for controlling the prepolymer molecular weight. Examples of this monofuntional compound are linear or branched C₁-C₂₄ alcohols, linear or branched C₁-C₂₄ dialkyl amines and glycol monoalkyl ethers, such as ethylene glycol monobutyl ether and diethylene glycol monobutyl ether. Component VI), when present, represents from 2 to 20 mol% of the sum of components II), III), IV), V) and VI).

In the preparation of the polyurethane the ratio between the isocyanate groups NCO of I) and the sum of reactive groups of II), III), IV) V) and VI) is between 1.2 and 2.5, preferably between 1.5 and 2.0.

The cationic polyurethanes containing from 20 to 150 meq/g of cationic groups can be prepared, for example, with a procedure comprising the following steps:
i. a prepolymer is prepared by reacting:
   I) an aliphatic, cycloaliphatic, araliphatic or aromatic polyisocyanate;
   II) a polycarbonate polyol and/or a polyester polyol having a number average molecular weight comprised between 500 and 3500;
   III) an aliphatic tertiary amine having two hydroxyl groups that react with -NCO groups;
   IV) optionally a bisphenol or an alkylene oxide adduct of a bisphenol;
   V) optionally an oxidatively drying resin with at least one isocyanate reactive group, which resin has a number average molecular weight comprised between 450 and 4000;
   VI) optionally a compound with one isocyanate reactive group, in such proportions that: a) the ratio between the isocyanate groups NCO of I) and the sum of isocyanate reactive groups of II), III), IV), V) and VI) is between 1.2 and 2.5; b) the polycarbonate polyol or polyester polyol II) represents from 30 to 95 mol% of the sum of components II), III), IV), V) and VI); d) I), II), III), IV), V) and VI) represent 90 mol% of the components of the prepolymer;
ii. the prepolymer is dispersed in water under stirring, at a concentration comprised between about 25 and 60 % by weight;
iii. the obtained cationic prepolymer is extended with water and/or polyamines.

Usually, step i. is carried out without any solvent, but, preferably, at the end of step i. a non reactive organic solvent, by way of example acetone, is added. This solvent is usually removed from the dispersion by, for example, distillation, vacuum distillation, isotropic distillation and thin-film evaporation.

The amine group of the prepolymer shall be salified. The salification can be carried out at the end of step i., in anhydrous environment, or during the subsequent dispersion in water of the prepolymer (step ii.). Normally, the prepolymer obtained at the end of step i. is salified with an organic or inorganic acid. Examples of acid include acetic acid, formic acid, lactic acid, glycolic acid, oxalic acid, citric acid, methanesulfonic acid or hydrochloric acid, phosphoric acid, sulfuric acid, nitric acid, carbonic acid and the like. Particularly preferred are methanesulfonic acid and acids which show complexing or chelating properties toward transition metal cations, such as lactic acid, glycolic acid and oxalic acid.

Step ii. can be carried out by adding, under mechanical stirring, the prepolymer to water or to water comprising the salification agent. An emulsifier can be present in this step and can be chosen among nonionic, zwitterionic and cationic surfactants. Preferably the emulsifier is a nonionic surfactant. A thickening agent, such as a polyacrylic compound, can be also present. Step ii. increases the stability and above all the redispersibility (in case of sedimentation) of the dispersion.

In one preferred embodiment, the chain extension of step iii. is made with a diamine with at least two isocyanate reactive hydrogens, used in such amount that from the 50 to 100 mol% of the free -NCO groups contained in the prepolymer react with it. The possibly remaining -NCO groups (up to 50 mol% of the free -NCO groups contained in the prepolymer) are allowed to react with water.

Examples of diamine chain extenders include hydrazine, ethylene diamine, butane diamine, isophorone diamine, piperazine, their derivatives and mixtures thereof.

The chain extension (step iii.) is preferably conducted with water at temperature of 20-60°C.

In another particular embodiment, in the procedure for the preparation of the cationic polyurethane, the chain extension is conducted with a diamine containing at least two isocyanate reactive hydrogens before the salification take place.

Preferably, the cationic polyurethane of the present invention has molecular weight from 2,000 and 100,000.

Preferably, the cationic polyurethane is obtained as an aqueous dispersion comprising from 20 to 50% by weight of cationic polyurethane and having a Brookfield® viscosity ranges from 5 to 400 mPa_{*}s at 50 rpm and 25 °C. This range of concentrations is particularly appreciable for industrial use because it corresponds to sufficiently concentrated dispersions that avoid the useless transportation of large amounts of water and, at the same time, the viscosity of the dispersions in this range of concentrations allows their easy handling.

Moreover, according to the here described invention, it is also possible to obtain aqueous coating composition comprising cationic polyurethanes that are completely free from solvents and have low content of volatile organic compounds.

The cationic polyurethane of the invention may be used individually for the inhibition of staining or they may be combined with from 0.1 to 5 % by weight of another "staining inhibitor" known in the prior art to provide even greater control of the staining problem.

Suitable staining inhibitors which can be used are those capable of blocking tannate ions that have been mentioned above. For example, tannin precipitants, such as barium metaborate, calcium barium phosphosilicate and water soluble aluminium salts, provide increased stain prevention when used in combination with cationic polyurethanes as described in this invention.

In another preferred embodiment, the aqueous coating composition of the invention further contains a complexing agent for transition metal ions. Exemplary useful complexing agents include one or more compounds such as citric acid, lactic acid, tartaric acid, gluconic acid, glycolic acid, oxalic acid, ethylenediaminetetraacetic acid, nitrilotriacetic acid, (1-hydroxyethylidene)-1,1-bisphosphonic acid, nitrilotris(methylene) triphosphonic acid, hexamethylene-diaminetetra(methylenephosphonic acid), 2-methylpentanediaminetetra(methylenephosphonic acid), and water-soluble ammonium or alkali-metal salts of any of these acids. Preferably the amount of complexing agent is 0.2 to 3.0 % by weight of the composition.

The coating composition of the present invention may optionally comprise up to 30 % by weight of other additives. Examples of suitable additives include: surfactants, thickeners, anti-oxidants, fillers, extenders, pigments, optical brighteners, light stabilizers, and, co-solvents. Such additives should be dispersed, preferably homogenously, throughout the coating composition. To achieve this, the additives may be added in solid form or in pre-dispersed form to the aqueous cationic polyurethane under stirring.

In another aspect, the invention provides a method for inhibiting stain formation in a substrate including applying the described aqueous coating composition on said substrate.

Preferred substrates are wooden and preferred substrates are tannin-rich woods, such as redwood, cedar, chestnut, oak and the like.

In addition to wood substrates, the compositions and process of this invention have also been found effective in blocking other stains, for example, those caused by smoke damage on structural materials such as plasterboard.

The wooden substrate to be coated may be of any form known in the art, including for example unedged timber, flitches, half-edged boards, square-edged lumber, strips, squares, carcassing, truss beams, scantlings and tongue-and-groove flooring, such as parquet, decking and anti-slip decking. The aqueous coating composition of the present invention may be applied to fully cover said substrates or to cover only parts thereof, including edges, curvilinear surfaces and beveled areas. The particular wood surface to be coated may be cleaned and prepared for application of the disclosed coating compositions using methods, such as sanding, that will be familiar to those skilled in the art. The coating composition can be then applied as either the primer or intermediate of a coating system.

The aqueous coating composition may be applied by conventional application methods such as flow coating, dipping, brushing, roller coating, air-assisted spray, airless spray and the like.

It is recommended that the coating compositions be applied to a wet film thickness of from 0.02 to 0.2 mm.

The invention will be further described in the following examples which are intended to illustrate, not limit, the invention.

### EXAMPLES

The following materials were used.
Polyol 1 = polyester adipate/phthalate from 1,6-hexanediol (Mₙ = 935 g/mol)
Polyol 2 = bisphenol A propoxylated (2 moles) (MW = 350 g/mol)
Polyol 3 = alkyd resin (polyester from mixed vegetable acids, Hydroxyl Number 106-118 mg_{KOH}/g, Mₙ = 980 g/mol)
Polyol 4 = polycarbonate from 1,6-hexanediol (Mₙ = 1000 g/mol)
Amine 1 = methyldiethanolamine
Diisocyanate 1 = H₁₂MDI, dicyclohexylmethane diisocyanate
Acid 1 = methanesulfonic acid

### Example 1

A reaction vessel, equipped with internal thermometer, stirrer and cooler, was loaded, under nitrogen atmosphere, with 136.82 mmol of Polyol 1 and 58.64 mmol of Polyol 2. The mixture was heated to 70 °C to homogenize. After having verified that the water content was below 0.1 % by weight, the mixture was cooled to 40 °C for the addition of 145.99 mmol of Amine 1 and stirred for 30 minutes.

Subsequently, always at 40 °C, 512.16 mmol of Diisocyanate 1 were added to the homogeneous mixture under stirring. The reaction mass was then heated and kept at 60°C for 30 minutes.

The reaction temperature was brought and maintained at 90°C until the concentration of the free -NCO groups dropped to a value of 4.78% by weight. The free -NCO groups were determined in this Example as well as in the other Examples according to the ASTM standard method D 2572. Once reached the above free -NCO groups concentration, the prepolymer was cooled below 60 °C adding at the same time 150 g of acetone. At about 40 °C, 145.99 mmol of Acid 1 were added under stirring and after 10 minutes, at about 40°C, 680 g of deionized water.

Afterwards acetone was distilled off under vacuum while keeping the cationic waterborne polyurethane dispersion under stirring to obtain a stable translucent product with a solid content of about 30% by weight. At the end of the distillation process the -NCO peak at 2240 cm⁻¹ in the IR spectrum had totally disappeared.

The obtained cationic aqueous polyurethane dispersion is stable for more than 6 months.

### Examples 2-5

The cationic aqueous polyurethane dispersions of Examples 2-5 were prepared following the same procedure of Example 1 using the raw materials and the amounts reported in Table 1. Table 2 reports the characteristics of the cationic polyurethane dispersions of Examples 1-5.

**Table 1**

| **Component** | **Example 1 (mmol)** | **Example 2 (mmol)** | **Example 3 (mmol)** | **Example 4 (mmol)** | **Example 5 (mmol)** |
|---|---|---|---|---|---|
| **POLYOL 1** | 136.82 | 116.93 | 175.38 | 157.43 | - |
| **POLYOL 2** | 58.64 | 58.47 | - | - | 57.29 |
| **POLYOL 3** | - | 19.49 | - | 17.49 | 19.10 |
| **POLYOL 4** | - | - | - | - | 114.59 |
| **AMINE 1** | 145.99 | 145.56 | 131.00 | 130.65 | 139.83 |
| **DIISOCYAN.1** | 512.16 | 510.67 | 459.57 | 458.37 | 496.22 |
| **ACID 1** | 145.99 | 145.56 | 131.00 | 130.65 | 139.83 |
| **WATER (g)** | 679.85 | 679.91 | 681.91 | 681.95 | 680.64 |
| **ACETONE (g)** | 150 | 150 | 150 | 150 | 150 |

**Table 2**

| | **Example 1** | **Example 2** | **Example 3** | **Example 4** | **Example 5** |
|---|---|---|---|---|---|
| **-NCO PREPOLYMER (%wt)** | 4.78 | 4.77 | 4.29 | 4.28 | 4.63 |
| **CATIONIC GROUPS (meq/g)** | 48.66 | 48.52 | 43.67 | 43.55 | 46.61 |
| **SOLID CONTENT (%wt)** | 30 | 30 | 30 | 30 | 30 |
| **SHELF LIFE (months)** | >6 | >6 | >6 | >6 | >6 |

### Applicative Test

In order to evaluate their performances, aqueous coating compositions were prepared from each cationic polyurethane of Examples 1-5. 3 g of butyl cellosolve, 3 g of deionized water, 0.5 g of wetting agent and 1 g of thickener were premixed and subsequently added, under moderate stirring, to 94 g of cationic polyurethane dispersion.

After homogenization 10 g of a white paste (with 75% of titanium dioxide) were added to the mixture.

Each composition was sprayed on oak panels producing a wet film of about 0.1 mm. The panels were then dried at room temperature and controlled humidity for 24 hours.

All the panels showed the same uniform whiteness without defects and abnormal yellowing. Moreover they did not show any stickiness.

The panels were then sanded manually with a standard abrasive paper N° 320 (stearate treated), taking care to apply a constant and uniform pressure on the whole surface.

The tannin stain inhibition of the different compositions was visually evaluated according to the ASTM standard method D6686-08. The panels were treated for 24 hours in the test chamber at a temperature of 39 °C. Table 3 report the results for each composition in terms of easiness of sandability, degree of clogging of the abrasive paper and tannin stain resistance.

**Table 3**

| | **SANDABILITY** | **CLOGGING** | **RESISTANCE** |
|---|---|---|---|
| **Example 1** | Easy | No | 7 |
| **Example 2** | Easy | No | 9 |
| **Example 3** | Easy | No | 7 |
| **Example 4** | Easy | No | 7 |
| **Example 5** | Easy | No | 8 |

After sanding, the panels were coated with an anionic acrylic white topcoat and dried for 7 days at room temperature. After this period, the appearance of the surface and the adhesion of the topcoat on the substrate were visually evaluated. The results are reported in Table 4. Adhesion was evaluated according to the ASTM standard method D3359-02.

**Table 4**

| | **APPEARANCE** | **ADHESION** |
|---|---|---|
| **Example 1** | White and Uniform | 5B |
| **Example 2** | White and Uniform | 5B |
| **Example 3** | White and Uniform | 4-5B |
| **Example 4** | White and Uniform | 5B |
| **Example 5** | White and Uniform | 5B |

The aqueous coating compositions of the invention, containing cationic polyurethanes, show good performance both as coating agents and staining inhibitors.

## Claims

1. Use as antistain coating agent for wooden or plasterboard substrates of an aqueous composition comprising from 15 to 45% by weight of a cationic polyurethane containing from 20 to 150 meq/g of cationic groups.

2. The use of Claim 1), wherein the cationic polyurethane is prepared by salifying and extending in water with water and/or a polyamine a prepolymer obtained by reacting:
I) an aliphatic, cycloaliphatic, araliphatic or aromatic polyisocyanate;
II) a polycarbonate polyol and/or a polyester polyol having a number average molecular weight comprised between 500 and 3500;
III) an aliphatic tertiary amine having two hydroxyl groups that react with -NCO groups;
IV) optionally a bisphenol or an alkylene oxide adduct of a bisphenol;
V) optionally an oxidatively drying resin with at feast one isocyanate reactive group, which resin has a number average molecular weight comprised between 450 and 4000;
VI) optionally a compound with one isocyanate reactive group, in such proportions that: the ratio between the isocyanate groups -NCO of I) and the sum of the isocyanate reactive groups of II), III), IV), V) and VI) is between 1.2 and 2.5; the polycarbonate polyol and/or polyester polyol II) represent in weight from 30 to 95 mol% of the sum of II), III), IV), V) and VI); and I), II), III), IV), V) and VI) represent at least 90 mol% of the components of the prepolymer.

3. The use according to claim 2), wherein said prepolymer is prepared by reacting the components from I) to VI) in such proportions that the bisphenol or alkylene oxide adduct of a bisphenol IV) represents from 3 to 25 mol% of the sum of II), III), IV), V) and VI).

4. The use according to claim 2), wherein said prepolymer is prepared by reacting the components from I) to VI) in such proportions that the oxidatively drying resin V) represents from 2 to 20 mol% of the sum of II), III), IV), V) and VI).

5. The use according to Claim 2), wherein said prepolymer is prepared by reacting the components from I) to VI) in such proportions that: the molar ratio between the isocyanate groups NCO of I) and the sum of the isocyanate reactive groups of II), III), IV), V) and VI) is between 1.2 and 2.5; the polycarbonate polyol or polyester polyol II) represent from 30 to 70 mol% of the sum of II), III), IV), V) and VI); the bisphenol or alkylene oxide adduct of a bisphenol IV) represents from 10 to 20 mol% of the sum of II), III), IV), V) and VI); the oxidatively drying resin V) represents from 3 to 12 mol% of the sum of II), III), IV), V) and VI); and I), II), III), IV), V) and VI) represent 100 mol% of the components of the prepolymer.

6. The use according to Claim 1), wherein said cationic polyurethane contains from 30 to 90 meq/g of cationic groups.

7. The use according to Claim 1), wherein said aqueous coating composition further comprises from 0.1 to 5 % by weight of another antistain agent.

8. Process for the inhibition of staining of a wooden or plasterboard substrate comprising the step of applying to the substrate an aqueous composition comprising from 15 to 45% by weight of a cationic polyurethane containing from 20 to 150 meq/g of cationic groups

9. The process according to Claim 8, wherein the aqueous composition comprises from 18 to 35% by weight of the cationic polyurethane.

10. The process according to Claims 8) or 9), wherein the aqueous composition is applied to the substrate with a wet thickness from 0.02 to 0.2 mm.

## Patentansprüche

1. Verwendung von einer wässrigen Zusammensetzung als Antifleckenbeschichtungsmittel für hölzerne oder gipskartonartige Substrate umfassend gewichtsmäßig von 15 bis 45% eines kationischen Polyurethans welche 20 bis 150 meq/g kationischer Gruppen enthält.

2. Die Verwendung nach Anspruch 1, wobei das kationische Polyurethan durch Salzbildung und indem man es in Wasser mit Wasser und/oder Polyamin erweitert, hergestellt ist, wobei ein Prepolymer durch Reaktion von folgenden Komponenten erhalten wird:
I) ein aliphatisches, cycloaliphatisches oder aromatisches Polyisocyanat;
II) ein Polycarbonatpolyol und/oder ein Polyesterpolyol mit einem zahlengemittelten Molekulargewicht im Bereich zwischen 500 und 3500;
III) ein aliphatisches tertiäres Amin, welches zwei Hydroxylgruppen hat welche mit den -NCO Gruppen reagieren;
IV) optional ein Bisphenol oder ein Alkylenoxid-Addukt eines Bisphenols;
V) optional ein oxidatives trockenes Harz mit mindestens einer reaktiven Isocyanat-Gruppe, wobei das Harz ein zahlengemitteltes Molekulargewicht im Bereich zwischen 450 und 4000 hat;
VI) optional eine Komponente mit einer reaktiven Isocyanat-Gruppe,
in solchen Verhältnissen dass:
das Verhältnis zwischen den Isocyanat-Gruppen -NCO von I) und der Summe der reaktiven Isocyanat-Gruppen von II), III), IV), V) und VI) zwischen 1,2 und 2,5 ist;
das Polycarbonatpolyol und/oder das Polyesterpolyol II) gewichtsmäßig 30 bis 95 mol% der Summe von II), III), IV), V) und VI) repräsentiert/repräsentieren;
und I), II), III), IV), V) und VI) mindestens 90 mol% der Komponenten des Prepolymers repräsentieren.

3. Die Verwendung nach Anspruch 2, wobei das Prepolymer durch Reaktion/Umsetzung der Komponenten I) bis VI) in solchen Verhältnissen vorbereitet ist, dass das Bisphenol oder das Alkylenoxid-Addukt eines Bisphenols IV) 3 bis 25 mol% der Summe von II), III), IV), V) und VI) repräsentiert.

4. Die Verwendung nach Anspruch 2, wobei das Prepolymer durch Reaktion/Umsetzung der Komponenten I) bis VI) in solchen Verhältnissen vorbereitet ist, dass das oxidative trockene Harz V) von 2 bis 20 mol% der Summe von II), III), IV), V) und VI) repräsentiert,

5. Die Verwendung nach Anspruch 2, wobei das Prepolymer durch Reaktion/Umsetzung der Komponenten I) bis VI) in solchen Verhältnissen vorbereitet ist dass:
das molare Verhältnis zwischen den Isocyanat-Gruppen NCO von I) und der Summe der reaktiven Isocyanat-Gruppen von II), III), IV), V) und VI) zwischen 1,2 und 2,5 ist;
das Polycarbonatpolyol und/oder der Polyesterpolyol II) von 30 bis 70 mol% der Summe von II), III), IV), V) und VI) repräsentiert/repräsentieren;
das Bisphenol oder Alkylenoxid-Addukt eines Bisphenols IV) von 10 bis 20 mol% der Summe von II), III), IV), V) und VI) repräsentiert;
das oxidative trockene Harz V) von 3 bis 12 mol% der Summe von II), III), IV), V) und VI) repräsentiert
und das I), II), III), IV), V) und VI) 100 mol% der Komponenten des Prepolymers repräsentieren.

6. Die Verwendung nach Anspruch 1, wobei das kationische Polyurethan von 30 bis 90 meq/g kationische Gruppen enthält.

7. Die Verwendung nach Anspruch 1, wobei die wässrige Beschichtungszusammensetzung zusätzlich gewichtsmäßig von 0,1 bis 5 % ein anderes Antifleckenmittel umfasst.

8. Verfahren für die Inhibierung der Fleckenbildung eines hölzernen oder gipskartonartigen Substrates umfassend den Schritt des Anwendens der wässrigen Zusammensetzung auf das Substrat, wobei die wässrige Zusammensetzung gewichtsmäßig von 15 bis 45% ein kationisches Polyurethan, welches von 20 bis 150 meq/g kationische Gruppen enthält, umfasst.

9. Das Verfahren nach Anspruch 8, wobei die wässrige Zusammensetzung gewichtsmäßig von 18 bis 35% des kationischen Polyurethans umfasst.

10. Das Verfahren nach Anspruch 8 oder 9, wobei die wässrige Zusammensetzung auf das Substrat mit einer Nassdicke von 0,02 bis 0,2 mm angewendet wird.

## Revendications

1. Utilisation d'un agent de revêtement antitache pour substrats en bois ou en placoplâtre constitué d'une composition aqueuse comprenant de 15 à 45 % en poids d'un polyuréthanne cationique contenant de 20 à 150 méq/g de groupes cationiques.

2. Utilisation selon la revendication 1, dans laquelle le polyuréthanne cationique est préparé par salification et dilution dans l'eau avec de l'eau et/ou une polyamine d'un prépolymère obtenu en faisant réagir ;
I) un polyisocyanate aliphatique, cycloaliphatique, araliphatique ou aromatique ;
II) un polycarbonate polyol et/ou un polyester polyol ayant un poids moléculaire moyen en nombre compris entre 500 et 3 500 ;
III) une amine tertiaire aliphatique ayant deux groupes hydroxyle qui réagissent avec des groupes -NCO ;
IV) éventuellement un bisphénol ou un produit d'addition d'oxyde d'alkylène à un bisphénol ;
V) éventuellement une résine à séchage oxydatif ayant au moins un groupe réactif isocyanate, ladite résine ayant un poids moléculaire moyen en nombre compris entre 450 et 4 000 ;
VI) éventuellement un composé ayant un groupe réactif isocyanate,
dans des proportions telles que : le rapport entre les groupes isocyanate -NCO de I) et la somme des groupes réactifs isocyanate de II), III), IV), V) et VI) est compris entre 1,2 et 2,5 ; le polycarbonate polyol et/ou le polyester polyol II) représente en poids de 30 à 95 % en mol de la somme de II), III), IV), V) et VI) ; et I), II), III), IV), V) et VI) représentent au moins 90 % en mol des composants du prépolymère.

3. Utilisation selon la revendication 2, dans laquelle ledit prépolymère est préparé en faisant réagir les composants I) à VI) dans des proportions telles que le bisphénol ou le produit d'addition d'oxyde d'alkylène à un bisphénol IV) représente de 3 à 25 % en mol de la somme de II), III), IV), V) et VI).

4. Utilisation selon la revendication 2, dans laquelle ledit prépolymère est préparé en faisant réagir les composants I) à VI) dans des proportions telles que la résine à séchage oxydatif V) représente de 2 à 20 % en mol de la somme de II), III), IV), V) et VI).

5. Utilisation selon la revendication 2, dans laquelle ledit prépolymère est préparé en faisant réagir les composants I) à VI) dans des proportions telles que : le rapport molaire entre les groupes isocyanate NCO de I) et la somme des groupes réactifs isocyanate de II), III), IV), V) et VI) est compris entre 1,2 et 2,5 ; le polycarbonate polyol et/ou le polyester polyol II) représente de 30 à 70 % en mol de la somme de II), III), IV), V) et VI) ; le bisphénol ou le produit d'addition d'oxyde d'alkylène à un bisphénol IV) représente de 10 à 20 % en mol de la somme de II), III), IV), V) et VI) ; la résine à séchage oxydatif V) représente de 3 à 12 % en mol de la somme de II), III), IV), V) et VI) ; et I), II), III), IV), V) et VI) représentant 100 % en mol des composants du prépolymère.

6. Utilisation selon la revendication 1, dans laquelle ledit polyuréthanne cationique contient de 30 à 90 méq/g de groupes cationiques.

7. Utilisation selon la revendication 1, dans laquelle ladite composition de revêtement aqueuse comprend en outre de 0,1 à 5 % en poids d'un autre agent antitache.

8. Procédé permettant d'inhiber la maculation d'un substrat en bois ou en placoplâtre comprenant l'étape consistant à appliquer au substrat une composition aqueuse comprenant de 15 à 45 % en poids d'un polyuréthanne cationique contenant de 20 à 150 méq/g de groupes cationiques.

9. Procédé selon la revendication 8, dans lequel la composition aqueuse comprend de 18 à 35 % en poids du polyuréthanne cationique.

10. Procédé selon les revendications 8 ou 9, dans lequel la composition aqueuse est appliquée au substrat à une épaisseur à l'état humide de 0,02 à 0,2 mm.
